# FASCICULE DE BREVET EUROPEEN

(11) **EP 4 295 132 B1**
(45) Date de publication et mention de la délivrance du brevet: **23.07.2025**
(21) Numéro de dépôt: 22706844.2
(22) Date de dépôt: 21.02.2022
(51) Int. Cl.: G01M 5/00, F17C 13/02, G01N 3/12

(54) **PROCÉDÉ ET DISPOSITIF DE MESURE DE RÉSISTANCE MÉCANIQUE D'UN RÉSERVOIR DE STOCKAGE POUR GAZ SOUS PRESSION POUR VÉHICULE**
VERFAHREN UND VORRICHTUNG ZUR MESSUNG DER MECHANISCHEN FESTIGKEIT EINES DRUCKGASSPEICHERS FÜR EIN FAHRZEUG
METHOD AND DEVICE FOR MEASURING MECHANICAL STRENGTH OF A PRESSURISED GAS STORAGE TANK FOR A VEHICLE

(30) Priorité: 19.02.2021 LU 102542
(43) Date de publication de la demande: 27.12.2023
(73) Titulaire: PLASTIC OMNIUM NEW ENERGIES FRANCE, 69007 Lyon (FR)
(72) Inventeur: JONGBLOEDT, Mathieu, 1130 Bruxelles (BE); THEBAULT, Rémi, 1130 Bruxelles (BE); BEERDEN, Joris, 1130 Bruxelles (BE)
(74) Mandataire: LLR
(86) Numéro de dépôt international: PCT/EP2022/054241
(87) Numéro de publication internationale: WO 2022/175523

(56) Documents cités:
- DE-A1- 102018 201 494
- JP-A- S57 154 032

## Description

L'invention concerne le domaine des véhicules, tels que par exemple les véhicules automobiles, les camions, les bus, les trains, les avions, les motocycles ou encore les bateaux. L'invention concerne plus particulièrement un procédé de mesure de résistance mécanique d'un réservoir de stockage pour gaz sous pression pour véhicule. L'invention concerne également un dispositif de mesure de résistance mécanique d'un réservoir de stockage pour gaz sous pression pour véhicule.

Un réservoir de stockage pour gaz sous pression pour véhicule est classiquement composé d'une enveloppe interne appelée liner, laquelle possède une fonction d'étanchéité vis-à-vis du gaz contenu dans le réservoir. Le liner comporte au moins une ouverture, laquelle est surmontée par un embout. Le liner et l'embout sont entourés par une structure de renforcement, généralement réalisée par enroulement de bandes de matériau composite à base de polymère thermodurcissable, par exemple à base de résine époxy ou polyuréthane, chargé de fibres de verre et/ou de carbone. Ainsi le liner de type « plastique » comprend au moins une ouverture pour le remplissage et le vidage du réservoir. Il est fabriqué par injection ou par rotomoulage ou par extrusion-soufflage d'un matériau polymère thermoplastique ou thermodurcissable (abrégé en « thermodur ») comme par exemple, le polyéthylène, le polyamide, le polyphtalamide, le polyuréthane, le silicone. Un tel réservoir est dit de type IV. Alternativement le réservoir est simplement constitué d'une coque en composite thermoplastique dépourvue de liner. Un tel réservoir est dit de type V.

De tels réservoirs de stockage pour gaz sous pression pour véhicule sont soumis à des tests de résistance mécanique. Ces tests consistent à soumettre lesdits réservoirs à des pressions, Pᵢₙₜ., de l'ordre de 1,5 fois la pression nominale, Pₙ. Cette pression nominale, Pₙ, est généralement de l'ordre de 350 à 700 bar en fonction de l'utilisation des réservoirs de stockage pour gaz sous pression pour véhicule.

Lors des tests de résistance mécanique des réservoirs de stockage pour gaz sous pression pour véhicule, la mise sous pression desdits réservoirs est réalisée à l'aide d'un liquide, généralement de l'eau. Les réservoirs à tester sont remplis par le liquide et la pression exercée, Pᵢₙₜ., portée à 1,5 fois la pression nominale, Pₙ. Une mesure de la déformation du réservoir est effectuée une fois la pression de test, Pᵢₙₜ., atteinte ou après un certain laps de temps de maintien du réservoir à la pression de test, Pᵢₙₜ. De tels tests de résistance mécanique correspondent notamment à des mesures des expansions élastiques et permanentes, telles que décrite dans la norme européenne EC79. Les documents JP S57 154032 A et DE 10 2018 201494 A1 proposent des exemples de tests de résistance mécanique. Le test selon le document JP S57 154032 A comprend une étape d'introduction d'un membre sous forme de vessie dans un réservoir, une étape de remplissage du membre avec de l'eau et une étape de mise sous pression de l'eau, afin d'exercer une pression sur les parois du réservoir.

A la fin des tests de résistance mécanique, les réservoirs sont vidés du liquide de test et doivent être séchés en vue notamment de leur utilisation pour le stockage de gaz sous pression. L'opération de séchage des réservoirs est relativement longue et complexe car le séchage doit être complet, cette dernière allonge les temps de cycle de production de manière conséquente. En outre, les réservoirs de stockage pour gaz sous pression pour véhicule comprennent parfois un « liner » en polyamide qui est un polymère sensible à l'eau du fait de sa capacité à l'absorption de cette dernière, modifiant ainsi les propriétés du polyamide.

L'invention a notamment pour objectif de pallier ces inconvénients de l'art antérieur.

Plus précisément, un objectif de l'invention, dans au moins un de ses modes de réalisation, est de mettre en œuvre un procédé de mesure de résistance mécanique d'un réservoir de stockage pour gaz sous pression pour véhicule qui présente des temps de cycle plus court que les procédés existants.

Un autre objectif de l'invention, dans au moins un de ses modes de réalisation, est de fournir un dispositif de mesure de résistance mécanique d'un réservoir de stockage pour gaz sous pression pour véhicule.

Conformément à un mode de réalisation particulier, l'invention concerne un procédé de mesure de résistance mécanique d'un réservoir de stockage pour gaz sous pression pour véhicule.

Selon l'invention, un tel procédé est énoncé selon la revendication 1.

Le principe général de l'invention repose sur l'utilisation d'un élément expansible inséré au sein du réservoir de stockage pour gaz sous pression pour véhicule lors du test de résistance mécanique. Cet élément expansible est rempli de liquide lors du test et permet la mise sous pression du réservoir de stockage pour gaz sous pression pour véhicule tout en évitant un contact direct entre le liquide et les parois intérieures du réservoir de stockage pour gaz sous pression pour véhicule.

Ainsi, l'invention repose sur une approche tout à fait nouvelle et inventive de mise en œuvre d'un procédé de mesure de résistance mécanique d'un réservoir de stockage pour gaz sous pression pour véhicule ne nécessitant pas une longue étape de séchage du réservoir testé après réalisation du test et permettant d'éviter une dégradation éventuelle du liner constituant l'intérieur du réservoir. En effet, lorsque l'élément expansible est retiré du réservoir de stockage pour gaz sous pression pour véhicule après le test, les parois intérieures sont encore sèches. Par ailleurs, le procédé selon l'invention permet d'éviter l'utilisation de dispositif de séchage et réduit ainsi le coût de production et de test de réservoir de stockage pour gaz sous pression pour véhicule.

L'élément expansible est imperméable au liquide. Par l'expression imperméable au liquide, on entend désigner que lors de la réalisation du test le liquide ne rentre pas en contact avec les parois intérieures du réservoir de stockage pour gaz sous pression pour véhicule par diffusion au travers de l'élément expansible. L'élément expansible est par exemple une feuille de grande surface apte sous l'effet du poids du liquide à recouvrir les parois intérieures du réservoir de stockage pour gaz sous pression pour véhicule.

Une évacuation du gaz contenu dans l'élément expansible et au besoin du gaz compris dans le réservoir est prévue lors de l'étape de remplissage de l'élément expansible par le liquide. Cette évacuation est réalisée avec un moyen d'évacuation de gaz. Ce gaz est par exemple de l'air ou bien un gaz traceur. Un gaz traceur permet avantageusement de combiner le test de résistance mécanique avec un test d'étanchéité du réservoir de stockage pour gaz sous pression pour véhicule. En effet, si par exemple un volume de gaz traceur est enfermé entre l'élément expansible et la paroi interne du réservoir, la mise sous pression de l'élément expansible entraine la mise sous pression de ce volume de gaz traceur. Alors, en cas en de fuite, il est possible de détecter le gaz traceur à l'extérieur du réservoir de stockage pour gaz sous pression pour véhicule. De plus, le volume de gaz traceur porté à haute pression étant réduit par rapport aux procédés de test d'étanchéité existant, l'énergie libérée en cas de rupture du réservoir est réduite ce qui simplifie le dimensionnement des dispositifs de sécurité. Il en découle un gain important en temps de cycle, en investissements et en consommables spécifiques au test d'étanchéité.

L'étape de connexion de l'élément expansible est de préférence réalisée avant l'étape d'introduction de l'élément expansible au sein du réservoir de stockage sous pression par l'au moins une ouverture.

L'étape de mesure d'une déformation possible du réservoir de stockage pour gaz sous pression pour véhicule est par exemple une mesure dimensionnelle de type mesure du diamètre et de la longueur du réservoir. Cette mesure dimensionnelle peut être réalisée à l'aide d'une caméra, d'un scanner 3D, d'une mesure de distance à l'aide d'un laser ou d'un palpeur de type LVDT acronyme anglais de Linear Variable Differential Transformer, par contact avec un système de type comparateur. Selon un autre exemple, la mesure d'une déformation possible du réservoir de stockage pour gaz sous pression pour véhicule est une mesure volumétrique correspondant à la mesure de la quantité de liquide ajoutée pendant la montée en pression. Si la mesure d'une déformation possible du réservoir de stockage pour gaz sous pression pour véhicule est une mesure dimensionnelle, elle doit permettre de calculer une expansion volumétrique. Cette étape de mesure d'une déformation possible du réservoir de stockage pour gaz sous pression pour véhicule vise à déterminer que l'expansion volumétrique est maintenue dans une fourchette de tolérance. Ladite fourchette de tolérance est telle qu'un réservoir ne doit pas se déformer de plus de 10% de la moyenne de déformation de l'ensemble des réservoirs du même lot de production.

Avantageusement, le procédé de mesure de résistance mécanique d'un réservoir de stockage pour gaz sous pression pour véhicule est tel que l'élément expansible est une vessie.

Ainsi, un élément expansible de type vessie permet une insertion plus aisée de l'élément expansible au sein du réservoir de stockage pour gaz sous pression pour véhicule.

Le procédé de mesure de résistance mécanique d'un réservoir de stockage pour gaz sous pression pour véhicule est tel qu'il comprend une étape d'étirement de l'élément expansible dans le sens de la longueur.

Ainsi, un étirement de l'élément expansible dans le sens de la longueur permet une insertion plus aisée de ce dernier au sein du réservoir via l'ouverture, dite première ouverture, plus particulièrement lorsque l'élément expansible est une vessie dont le diamètre extérieur est plus large que le diamètre intérieur de l'ouverture du réservoir, dite première ouverture, par laquelle elle est insérée. Une telle étape permet de réduire le diamètre extérieur de la vessie par étirement dans le sens de la longueur. En outre, l'étirement de l'élément expansible dans le sens de la longueur permet d'uniformiser les contraintes appliquées à l'élément expansible lorsqu'il est mis sous pression. Dès lors, on uniformise la pression, Pᵢₙₜ., appliquée sur l'ensemble des parois intérieures du réservoir de stockage pour gaz sous pression pour véhicule, ce qui contribue à fiabiliser et améliorer le caractère reproductible du procédé de mesure de résistance mécanique.

Cette étape d'étirement dans le sens de la longueur est réalisée avant, pendant ou après l'insertion de l'élément expansible au sein du réservoir de stockage pour gaz sous pression pour véhicule permettant ainsi de mettre en contact plus rapidement l'élément expansible avec l'ensemble des parois intérieures du réservoir de stockage pour gaz sous pression pour véhicule et notamment le fond du réservoir. Ainsi dans le cas d'un élément expansible sous la forme d'une vessie ayant un diamètre extérieur plus petit que le diamètre intérieur de l'ouverture du réservoir par laquelle elle est insérée, cette étape permet de réduire la durée du test. Le premier moyen d'étirage permettant l'étirement de l'élément expansible est par exemple un différentiel de pression entre l'intérieur et l'extérieur de la vessie.

Le procédé de mesure de résistance mécanique d'un réservoir de stockage pour gaz sous pression pour véhicule est tel qu'il comprend une étape d'assemblage d'un premier moyen de couplage à l'élément expansible.

Ainsi, cette étape d'assemblage d'un premier moyen de couplage à l'élément expansible permet d'obtenir une bonne étanchéité de l'assemblage obtenu et de maintenir l'élément expansible durant l'étape de remplissage de ce dernier par le liquide. L'élément de couplage permet également de relier le volume interne de l'élément expansible à un dispositif de mise sous pression par le fluide.

Le procédé de mesure de résistance mécanique d'un réservoir de stockage pour gaz sous pression pour véhicule est tel que l'étape d'étirer l'élément expansible est effectuée par au moins un mouvement en translation d'un premier moyen d'étirage par rapport au premier moyen de couplage.

Ainsi, une étape d'étirement de l'élément expansible effectuée par au moins un mouvement en translation d'un premier moyen d'étirage par rapport au premier moyen de couplage permet d'utiliser le premier moyen de couplage en contre appui du premier moyen d'étirage.

Le premier moyen d'étirage permettant l'étirement de l'élément expansible peut être un poids inséré dans l'élément expansible tel qu'une bille ou bien le simple poids d'une partie du liquide utilisé pour réaliser le test de résistance mécanique. Le premier moyen d'étirage permettant l'étirement de l'élément expansible peut également être une tige ou un barreau qui est introduit dans l'ouverture du réservoir de stockage pour gaz sous pression pour véhicule à la suite de l'élément expansible. Alternativement, le premier moyen d'étirage permettant l'étirement de l'élément expansible peut également être respectivement une tige munie d'un moyen de prise de l'élément expansible ou bien une tige aimantée par exemple qui est introduit au sein du réservoir de stockage pour gaz sous pression pour véhicule par une seconde ouverture située par rapport au réservoir à l'opposé de l'ouverture, dite première ouverture, par laquelle l'élément expansible est introduit. Dans le cas d'une tige aimantée, celle-ci est utilisée en complément d'une bille métallique ayant des propriétés ferromagnétiques, la tige aimantée et la bille métallique étant situées de part et d'autre de l'élément expansible.

Selon une mise en œuvre préférée du mode de mise en œuvre précédent de l'invention, le procédé de mesure de résistance mécanique d'un réservoir de stockage pour gaz sous pression pour véhicule est tel que le premier moyen d'étirage est une conduite de remplissage de l'élément expansible par le liquide.

Ainsi, l'utilisation d'une conduite de remplissage comme premier moyen d'étirage permet de réduire le nombre d'opérations liées au procédé de mesure de résistance mécanique d'un réservoir de stockage pour gaz sous pression pour véhicule. Un seul et même moyen servant à l'étirement de l'élément expansible et à son remplissage par le liquide.

Selon une mise en œuvre préférée du mode de mise en œuvre précédent de l'invention, le procédé de mesure de résistance mécanique d'un réservoir de stockage pour gaz sous pression pour véhicule est tel que la conduite de remplissage de l'élément expansible par le liquide à un diamètre extérieur inférieur au diamètre intérieur de l'au moins une ouverture, dite première ouverture.

Ainsi une telle conduite peut être introduite au sein du réservoir au travers de l'au moins une ouverture, dite première ouverture, ceci permettant un remplissage plus aisé par le liquide. Avantageusement, cette conduite est utilisée pour vider le liquide contenu dans l'élément expansible.

Selon une mise en œuvre préférée de l'invention, le procédé de mesure de résistance mécanique d'un réservoir de stockage pour gaz sous pression pour véhicule est tel que la conduite de remplissage de l'élément expansible par le liquide traverse le premier moyen de couplage.

Selon une mise en œuvre avantageuse de l'invention, le procédé de mesure de résistance mécanique d'un réservoir de stockage pour gaz sous pression pour véhicule est tel que le liquide est sélectionné parmi le groupe de liquides consistant en de l'eau ou de solution à base d'eau, préférentiellement le liquide est de l'eau de ville, plus préférentiellement le liquide est de l'eau de ville filtrée et adoucie.

Ainsi, l'utilisation de liquide sélectionné parmi de l'eau ou des solutions à base d'eau permet d'utiliser un liquide ayant une masse volumique élevée et facilement disponible. Avantageusement, l'eau contient des solvants additionnels tel que de l'alcool afin d'obtenir un azéotrope présentant une température d'évaporation inférieure à l'eau. L'utilisation d'une eau de ville filtrée et adoucie permet d'éviter l'accumulation de calcaire dans l'élément expansible ou/et le circuit hydraulique auquel est raccordé le réservoir pour les besoins du test de résistance mécanique.

Selon une mise en œuvre avantageuse de l'invention, le procédé de mesure de résistance mécanique d'un réservoir de stockage pour gaz sous pression pour véhicule est tel que l'élément expansible est à base d'élastomère plus particulièrement sélectionné parmi le groupe du caoutchouc Butadiène-Acrylonitrile (NBR), du Butadiène Acrylonitrile hydrogéné (HNBR), du nitrile carboxylé (XNBR), du caoutchouc Ethylène-Propylène-Diène (EPDM), du Silicone Polysiloxane-Vinyle-Méthyle (VMQ), du caoutchouc fluoré (FKM), du caoutchouc perfluoré (FFKM), du Chloroprène (CR), du polyacrylate (ACM), de l'Ethylène-acrylate (AEM) et du caoutchouc naturel. Préférentiellement, l'élastomère a une capacité d'étirement importante par exemple une capacité d'étirement d'environ 400%. Le matériau qui constitue l'élément expansible présente avantageusement un coefficient de friction faible avec la matière de la paroi interne du réservoir de stockage pour gaz sous pression de manière à pouvoir glisser librement pendant son expansion sans créer d'étirement localement trop important, ce qui pourrait conduire à une rupture de l'élément expansible. Avantageusement, le coefficient de friction est réduit par application d'un produit spécifique sur la surface extérieure de l'élément expansible, ledit produit ne laissant aucune humidité et ayant une tendance à s'évaporer très rapidement.

Avantageusement, la géométrie interne du réservoir de stockage pour gaz sous pression pour véhicule est exempte d'angles vifs afin d'éviter des étirements localement trop importants de l'élément expansible, ce qui pourrait conduire à sa rupture.

Selon une mise en œuvre avantageuse de l'invention, le procédé de mesure de résistance mécanique d'un réservoir de stockage pour gaz sous pression pour véhicule est tel que le moyen de couplage se solidarise à l'ouverture, dite première ouverture, dudit réservoir par filetage.

Ainsi, la force de recul exercée par la pression du liquide pendant le test est mieux absorbée.

Selon une mise en œuvre avantageuse de l'invention, le procédé de mesure de résistance mécanique d'un réservoir de stockage pour gaz sous pression pour véhicule est tel que le gaz contenu dans ledit réservoir est évacué pendant le remplissage de l'élément expansible, ledit gaz étant de l'air par exemple.

Ainsi, les poches de gaz résiduelles sont minimisées et la géométrie de l'élément expansible après son expansion est mieux maitrisée.

Le gaz peut être librement évacué à travers l'ouverture du réservoir de stockage pour gaz sous pression pour véhicule ou peut être évacué à travers des évents prévus à cet effet dans le moyen de couplage, si ce dernier est solidarisé avec l'ouverture du réservoir. Enfin, le gaz peut également être évacué par une seconde ouverture si le réservoir dispose de deux ouvertures.

Selon une mise en œuvre avantageuse de l'invention, le procédé de mesure de résistance mécanique d'un réservoir de stockage pour gaz sous pression pour véhicule est tel qu'il comprend, avant l'étape consistant à remplir l'élément expansible de liquide, une étape de pré-remplissage de l'élément expansible de liquide.

Pendant le pré-remplissage, la partie basse de l'élément expansible se gonfle pour venir en contact avec la paroi interne du réservoir en chassant l'air hors du réservoir. Le pré-remplissage permet ainsi d'éviter que des bulles d'air se retrouvent piégées entre l'élément expansible et réservoir, ce qui pourrait fausser le procédé de mesure de résistance mécanique du réservoir. Cela contribue en outre à éviter tout endommagement de l'élément expansible lors de la mise en œuvre du procédé de mesure de résistance mécanique d'un réservoir de stockage pour gaz sous pression pour véhicule.

Selon une mise en œuvre avantageuse de l'invention, le procédé de mesure de résistance mécanique d'un réservoir de stockage pour gaz sous pression pour véhicule est tel qu'il comprend, avant l'étape consistant à remplir l'élément expansible de liquide, une étape de gonflage de l'élément expansible.

Cette étape de gonflage permet de réaliser un étirement homogène de l'élément expansible afin d'assurer un contact uniforme entre l'élément expansible et la paroi interne du réservoir, ce en évitant que des plis ne se forment à la surface de l'élément expansible. Cela améliore la fiabilité et la reproductibilité du procédé de mesure de résistance mécanique d'un réservoir de stockage pour gaz sous pression pour véhicule. Cela contribue en outre à éviter tout endommagement de l'élément expansible lors de la mise en œuvre du procédé de mesure de résistance mécanique d'un réservoir de stockage pour gaz sous pression pour véhicule.

L'invention concerne également un dispositif de mesure de résistance mécanique d'un réservoir de stockage pour gaz sous pression pour véhicule, ledit dispositif étant apte à mettre en œuvre le procédé selon l'invention.

Selon un mode de réalisation conforme à l'invention, le dispositif de mesure de résistance mécanique d'un réservoir de stockage pour gaz sous pression pour véhicule est énoncé selon la revendication 9.

L'élément expansible est apte à recevoir du liquide même s'il n'est que partiellement inséré au sein du réservoir de stockage pour gaz sous pression pour véhicule. Ceci est le cas lorsque le poids du liquide permet l'insertion de l'élément expansible au sein du réservoir.

Selon un mode de réalisation avantageux, le dispositif de mesure de résistance mécanique d'un réservoir de stockage pour gaz sous pression pour véhicule est tel que l'élément expansible est une vessie.

Selon un mode de réalisation avantageux, le dispositif de mesure de résistance mécanique d'un réservoir de stockage pour gaz sous pression pour véhicule est tel que le premier moyen d'étirement est une tige.

Selon un mode de réalisation avantageux, le dispositif de mesure de résistance mécanique d'un réservoir de stockage pour gaz sous pression pour véhicule est tel que la tige est la conduite de liquide, préférentiellement une canne.

Selon un mode de réalisation avantageux, le dispositif de mesure de résistance mécanique d'un réservoir de stockage pour gaz sous pression pour véhicule est tel qu'il comprend une pompe apte à évacuer le liquide contenu dans l'élément expansible.

Selon un mode de réalisation avantageux, le dispositif de mesure de résistance mécanique d'un réservoir de stockage pour gaz sous pression pour véhicule est tel que l'élément expansible comprend une zone de réception du premier moyen de couplage.

Ainsi une zone de réception du premier moyen de couplage sur l'élément expansible permet un meilleur assemblage entre le premier élément de couplage et l'élément expansible. Cette zone peut être réalisée dans le cas d'une vessie matérialisée par la présence de saillies sur la paroi extérieure de la vessie dans une zone de plus faible diamètre.

Selon un mode de réalisation avantageux, le dispositif de mesure de résistance mécanique d'un réservoir de stockage pour gaz sous pression pour véhicule est tel qu'il comprend des moyens d'introduction d'un gaz dans l'élément expansible et/ou le réservoir. Préférentiellement, les moyens d'introduction d'un gaz correspondent aux moyens d'évacuation de gaz contenu dans l'élément expansible et/ou le réservoir.

D'autres caractéristiques et avantages de l'invention apparaîtront plus clairement à la lecture de la description suivante d'un mode de mise en œuvre préférentiel, donné à titre de simple exemple illustratif et non limitatif, et des dessins annexés, parmi lesquels :
- la figure 1 illustre les étapes de fourniture d'un réservoir de stockage pour gaz sous pression pour véhicule comprenant au moins une ouverture d'introduction d'un élément expansible au sein du réservoir de stockage pour gaz sous pression pour véhicule par l'au moins une ouverture et de connexion de l'élément expansible à une conduite d'un liquide ;
- la figure 2 illustre un mode de réalisation d'un premier moyen de couplage permettant la connexion de l'élément expansible et de la conduite de liquide à l'au moins une ouverture du réservoir de stockage pour gaz sous pression pour véhicule ;
- la figure 3 illustre l'étape d'introduction de l'élément expansible au sein du réservoir de stockage pour gaz sous pression pour véhicule par l'au moins une ouverture ;
- la figure 4 décrit la fin de l'étape d'introduction de l'élément expansible au sein du réservoir de stockage pour gaz sous pression pour véhicule par l'au moins une ouverture ;
- la figure 5 illustre l'étape de pré-remplissage de l'élément expansible au sein du réservoir par un liquide ;
- la figure 6 illustre l'étape de gonflage de l'élément expansible au sein du réservoir ;
- la figure 7 illustre l'étape de remplissage de l'élément expansible au sein du réservoir par le liquide ; et
- la figure 8 illustre la fin de l'étape de remplissage et le début de la mise sous pression, Pᵢₙₜ., de l'ensemble des parois intérieures du réservoir au moyen de l'élément expansible rempli de liquide.

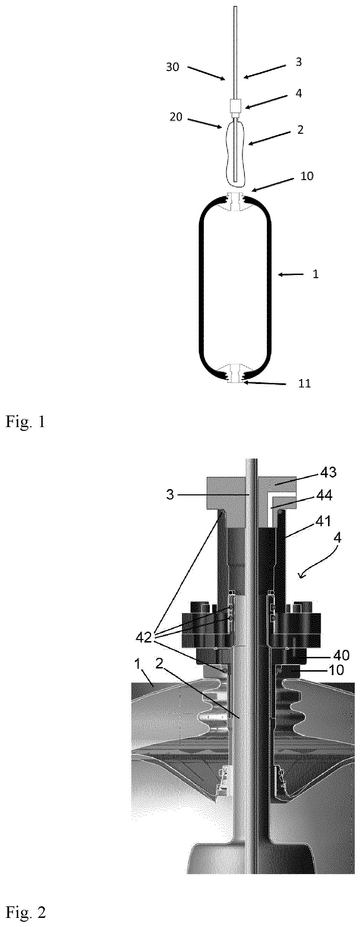

On présente, en relation avec la figure 1, un mode de mise en œuvre des étapes de fourniture d'un réservoir de stockage pour gaz sous pression pour véhicule 1 comprenant au moins une ouverture 10 et de connexion de l'élément expansible 2 à une conduite d'un liquide 3 selon l'invention. L'ouverture 10 est surmontée par un embout métallique permettant de raccorder le réservoir 1 au circuit de remplissage et/ou de vidage du réservoir (non représenté). Le réservoir de stockage pour gaz sous pression pour véhicule 1 soumis au test de résistance mécanique comprend au moins une ouverture 10, dite première ouverture, par laquelle sera introduite l'élément expansible 2 qui est une vessie 20 en matériau élastomère. Le réservoir comprend une seconde ouverture 11 située à l'opposé de l'ouverture 10 par laquelle sera introduite l'élément expansible 2. La seconde ouverture 11 est surmontée par un embout métallique permettant de raccorder le réservoir 1 au circuit de remplissage et/ou de vidage du réservoir (non représenté). Cette seconde ouverture 11 est laissée ouverte. La vessie 20 en matériau élastomère est connectée à une conduite de liquide 3. La conduite de liquide 3 se présente sous la forme d'une canne 30. La vessie 20 est assemblée à un premier moyen de couplage 4 de manière étanche. La conduite de liquide 3 traverse le premier moyen de couplage 4. Cette conduite de liquide 3 peut dépasser à l'extérieur de la vessie 20 d'une distance équivalente à la longueur interne du réservoir 1, par exemple de plus de 2 m. Pour les réservoirs moins longs, elle va dépasser moins. La longueur de cette conduite de liquide 3 à l'intérieur de la vessie 2 dans le cas d'une canne rigide est inférieure à la longueur du réservoir à tester, préférentiellement la longueur de cette conduite de liquide 3 à l'intérieur de la vessie 2 rigide est proche de la longueur du réservoir à tester, de manière à étirer l'élément expansible 2 jusqu'à une distance de la partie opposée du réservoir 1, partie opposée par rapport à l'ouverture 10, dite première ouverture, équivalente à environ le rayon interne du réservoir 1. De cette manière l'élément expansible 2 peut s'étirer de manière à peu près uniforme dans toutes les directions.

La figure 2 illustre un mode de réalisation du premier moyen de couplage 4. Le premier moyen de couplage 4 comprend un corps principal 41 qui est creux de sorte qu'il peut être traversé sur toute sa longueur par la conduite de liquide 3. Le corps principal 41 peut en outre loger une partie d'extrémité de l'élément expansible 2, ouverte, de sorte qu'elle soit positionnée dans le corps principal 41 et autour de la conduite de liquide 3.

Le premier moyen de couplage 4 est configuré pour pouvoir être fixé, ici par vissage, de manière étanche dans l'au moins une ouverture 10 du réservoir de stockage pour gaz sous pression pour véhicule 1. A cet effet, le premier moyen de couplage 4 comprend au moins un joint annulaire 42 permettant d'assurer l'étanchéité de la connexion entre le corps principal 41 et le réservoir de stockage pour gaz sous pression pour véhicule 1. Le premier moyen de couplage 4 est en outre configuré pour assurer une fixation serrée et étanche de la partie d'extrémité de l'élément expansible 2 dans le corps principal 41. Cette étanchéité est ici assurée par d'autres joints annulaires 42.

Le premier moyen de couplage 4 comprend un organe de remplissage 43 qui est rapporté de manière étanche en partie à l'intérieur du corps principal 41, l'étanchéité étant ici réalisée à l'aide d'un joint annulaire 42 supplémentaire. L'organe de remplissage 43 comprend un passage d'air 44 permettant, alternativement, d'injecter de l'air dans l'élément expansible 2 et de vider l'élément expansible 2 de l'air qu'il contient. L'organe de remplissage 43 comporte un détendeur (non représenté) configuré pour réguler la pression de l'air dans l'élément expansible lors de son remplissage et de sa vidange.

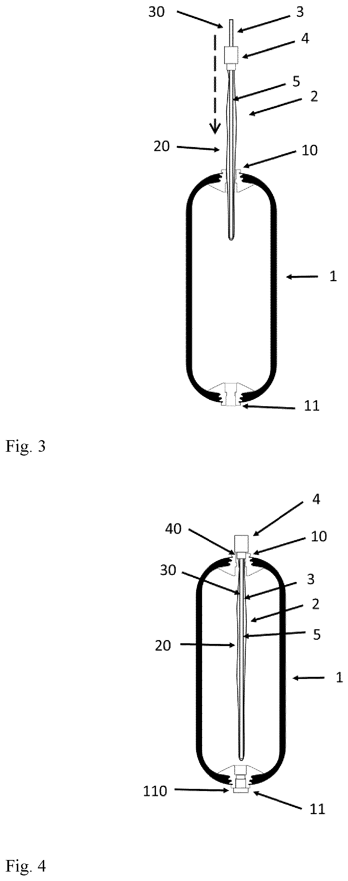

La figure 3 illustre un mode de mise en œuvre de l'étape d'introduction de l'élément expansible 2 au sein du réservoir de stockage pour gaz sous pression pour véhicule 1 par l'au moins une ouverture 10. Avant la mise en œuvre de cette étape d'introduction de l'élément expansible 2 qui est une vessie 20 en matériau élastomère, ladite vessie est étirée dans le sens de la longueur par déplacement d'un premier moyen d'étirage 5. L'étape d'étirement de l'élément expansible 2 est effectuée par au moins un mouvement en translation d'un premier moyen d'étirage 5 par rapport au premier moyen de couplage 4. Ce mouvement est représenté par la flèche en traits interrompus. Cette étape d'étirement permet de réduire la section de l'élément expansible 2 et rend ainsi plus aisée l'introduction de la vessie 20 au sein du réservoir 1 par l'ouverture 10, dite première ouverture. Le premier moyen d'étirage est avantageusement constitué par la conduite de liquide 3 se présentant sous la forme d'une canne 30. Durant cette étape, la seconde ouverture 11 est laissée ouverte.

La figure 4 illustre la fin de l'étape d'introduction de l'élément expansible 2 au sein du réservoir de stockage pour gaz sous pression pour véhicule 1 par l'au moins une ouverture 10. On observe que le déplacement du premier moyen d'étirage 5 est terminé, ledit premier moyen d'étirage 5 comprenant la conduite de liquide 3 se présentant sous la forme d'une canne 30. En fin d'étape d'introduction de l'élément expansible 2 au sein du réservoir de stockage pour gaz sous pression pour véhicule 1, le premier moyen de couplage 4 vient se positionner sur l'au moins une ouverture 10, dite première ouverture. Le premier moyen de couplage 4 comprend un moyen de fermeture 40 apte à être inséré dans l'au moins une ouverture 10, dite première ouverture. Le premier moyen de couplage 4 peut ainsi par exemple être visser dans l'ouverture 10 pour se solidariser au réservoir et ainsi ne pas reculer sous l'effort de pression lors du test de résistance mécanique. L'élément expansible 2 qui est une vessie 20 en matériau élastomère est encore exempt de liquide. La seconde ouverture 11 qui était ouverte est ensuite refermée à l'aide d'un second moyen de fermeture 110. Pour maitriser le positionnement de l'élément expansible 2 dans le réservoir 1, le déplacement du premier moyen d'étirage 5 est effectué jusqu'à ce qu'il arrive en butée contre le second moyen de fermeture 110, de sorte que le premier moyen d'étirage 5 et l'élément expansible 2 soient en appui contre le second moyen de fermeture 110.

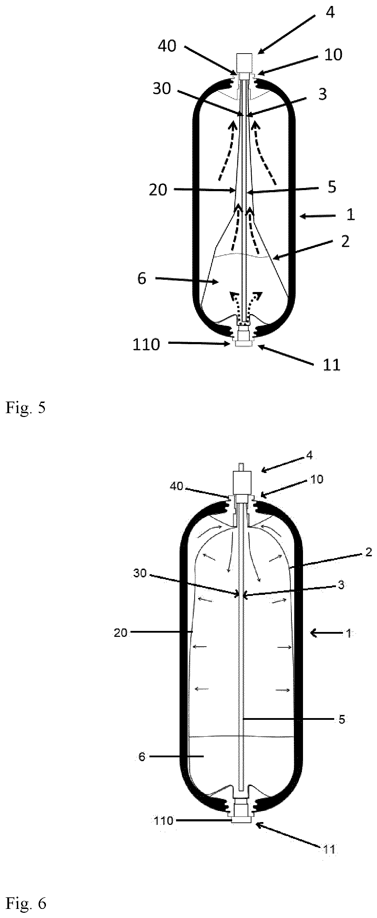

La figure 5 illustre l'étape de pré-remplissage de l'élément expansible 2 au sein du réservoir de stockage pour gaz sous pression pour véhicule 1 par un liquide 6. Le remplissage de l'élément expansible 2 qui est une vessie 20 en matériau élastomère est effectué via la conduite de liquide 3 qui se présente sous la forme d'une canne 30, ladite conduite de liquide 3 ayant servi comme premier moyen d'étirage 5 de l'élément expansible 2. La conduite de liquide 3 traverse le premier moyen de couplage 4. Le premier moyen de couplage 4 comprend un moyen de fermeture 40 inséré dans l'au moins une ouverture 10, dite première ouverture. Lors de cette étape de pré-remplissage, l'élément expansible 2 est rempli de liquide à environ 10% du volume interne du réservoir 1 au moyen de la conduite de liquide 3. Comme cela est représenté sur la figure 5, la longueur de la conduite de liquide 3 permet d'introduire le liquide dans l'élément expansible dans la partie basse de celle-ci. Dès lors, la partie basse de l'élément expansible 2 se dilate pour venir en contact avec la paroi interne du réservoir 1 en chassant l'air hors du réservoir par le passage d'air 44 de l'organe de remplissage 43, le mouvement de cet air étant représenté par les flèches en traits interrompus. Le pré-remplissage permet ainsi d'éviter que des bulles d'air se retrouvent piégées entre l'élément expansible 2 et la paroi interne du réservoir 1, ce qui pourrait fausser le procédé de mesure de résistance mécanique du réservoir. Les flèches en pointillés indiquent l'entrée de liquide 6 au sein de la vessie 20. Le liquide utilisé est sélectionné parmi le groupe de liquides consistant en de l'eau ou de solution à base d'eau, préférentiellement le liquide est de l'eau de ville, plus préférentiellement le liquide est de l'eau de ville filtrée et adoucie. La seconde ouverture 11 est fermée à l'aide du second moyen de fermeture 110.

La figure 6 illustre l'étape de gonflage de l'élément expansible 2 au sein du réservoir de stockage pour gaz sous pression pour véhicule 1. De l'air est introduit dans l'élément expansible 2 par le conduit d'air 44 ménagé dans l'organe de remplissage 43 jusqu'à atteindre une pression en air d'environ 5 bar à l'intérieur de l'élément expansible. Le liquide introduit dans la vessie 20 à l'étape précédente reste au fond de celle-ci. Cette étape de gonflage permet de réaliser un étirement homogène de l'élément expansible afin d'assurer un contact uniforme entre l'élément expansible et la paroi interne du réservoir 1, ce en évitant que des plis ne se forment à la surface de l'élément expansible 2.

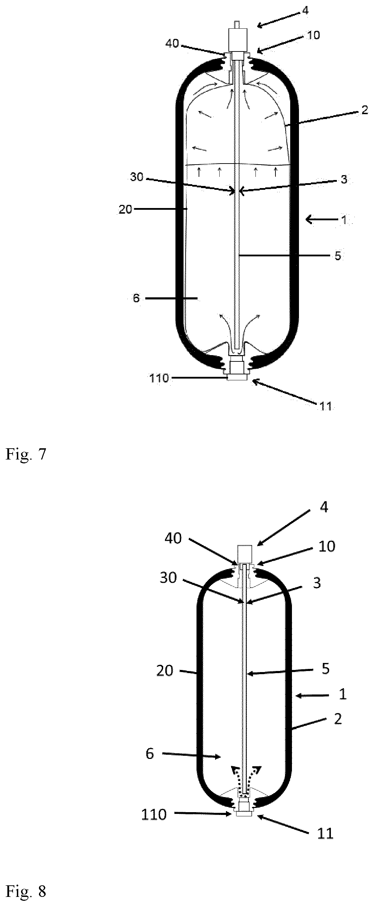

La figure 7 illustre l'étape de remplissage de l'élément expansible 2 au sein du réservoir de stockage pour gaz sous pression pour véhicule 1. Du liquide est introduit dans l'élément expansible par la conduite de liquide 3. Pendant ce remplissage, le détendeur permet l'évacuation de l'air contenu dans l'élément expansible 2, chassé par le liquide à plus haute pression que l'air, par le conduit d'air 44 ménagé dans l'organe de remplissage 43. L'air est maintenu sous pression par le détendeur lors de son évacuation afin de ne pas rompre le contact uniforme entre l'élément expansible 2 et la paroi interne du réservoir 1, établi à l'étape précédente, pendant le remplissage.

La figure 8 illustre la fin de l'étape de remplissage et le début de la mise sous pression, Pᵢₙₜ., de l'ensemble des parois intérieures du réservoir de stockage pour gaz sous pression pour véhicule 1 au moyen de l'élément expansible 2 rempli de liquide 6. L'élément expansible 2 sous la forme d'une vessie 20 emplit l'entièreté du volume interne du réservoir en étant « collé » ou plaqué aux parois intérieures de ce dernier sous l'effet de la pression exercée par le liquide 6. A cette fin, on retire l'organe de remplissage 43 du premier moyen de couplage 4 et on le remplace par un sous-adaptateur dit « haute pression » permettant de remplir l'élément expansible 2 avec le liquide à une haute pression. Le réservoir est fermé au niveau de ses ouvertures 10, 11. L'ouverture 10, dite première ouverture, est fermée à l'aide du moyen de couplage 4 via le moyen de fermeture 40. La seconde ouverture 11 est quant à elle fermée à l'aide du second moyen de fermeture 110. La conduite de liquide 3 est laissée à l'intérieur du réservoir 1 et est laissée connectée au circuit de liquide de manière à appliquer une pression sur les parois intérieures du réservoir 1 qui est égale à 1,5 fois la pression de travail ou pression nominale. Le réservoir 1 est soumis à ladite pression pendant un temps pouvant aller d'au moins une seconde à dans certain cas 10 minutes.

La mesure d'une déformation possible du réservoir de stockage pour gaz sous pression pour véhicule peut être une mesure dimensionnelle de type mesure du diamètre et de la longueur du réservoir. Cette mesure dimensionnelle peut être réalisé à l'aide d'une caméra, d'un scanner 3D, d'une mesure de distance à l'aide d'un laser ou d'un palpeur de type LVDT acronyme anglais de Linear Variable Differential Transformer, par contact avec un système de type comparateur. La mesure d'une déformation possible du réservoir de stockage pour gaz sous pression pour véhicule peut également être une mesure volumétrique correspondant à la mesure de la quantité de liquide ajoutée pendant la montée en pression.

Le réservoir 1 est ensuite vidé du liquide 6 contenu dans l'élément expansible 2. Cette opération de vidange peut être effectuée via la conduite de liquide 3 à l'aide d'une pompe. L'élément expansible 2 est ensuite sorti du réservoir de stockage pour gaz sous pression pour véhicule 1 par l'au moins une ouverture 10. Avantageusement, l'élément expansible 2 est soumis au préalable à une aspiration plus importante de manière à le plaquer contre la conduite de liquide 3.

Idéalement, le dispositif servant à la mise en œuvre du procédé de mesure de résistance mécanique d'un réservoir de stockage pour gaz sous pression pour véhicule 1 est orienté verticalement pour que la gravité aide à l'étirement uniforme de l'élément expansible 2, préférentiellement de la vessie 20 sous le poids du liquide 6. Préférentiellement, la géométrie interne du réservoir 1 a des formes et des courbures douces afin d'éviter un étirement localement plus important de l'élément expansible, préférentiellement de la vessie 20, ce qui risquerait de le déchirer. Par exemple si le test est réalisé sur un réservoir comprenant deux ouverture 10, 11, la seconde ouverture 11 est bouchée de manière à éviter que l'élément expansible 2, préférentiellement que la vessie 20, ne se pince dans une géométrie abrupte, ou ne ressorte à travers la seconde ouverture 11 et éclate. Avantageusement, le second moyen de fermeture 110 est utilisé comme seconde mâchoire d'un étau constitué de ce second moyen de fermeture et comme première mâchoire la canne 30 ayant également servi de premier moyen d'étirage 5 de l'élément expansible 2, ledit étau serrant l'élément expansible 2 et permettant de-sécuriser l'étirement de l'élément expansible 2, préférentiellement de la vessie, dans cette zone critique.

## Revendications

1. Procédé de mesure de résistance mécanique d'un réservoir de stockage pour gaz sous pression pour véhicule (1), ledit procédé comprenant au moins les étapes suivantes :
• Fournir un réservoir de stockage pour gaz sous pression pour véhicule (1) comprenant au moins une ouverture (10) ;
• Assembler un premier moyen de couplage (4) à un élément expansible (2) ;
• Étirer l'élément expansible (2) dans le sens de la longueur par au moins un mouvement en translation d'un premier moyen d'étirage (5) par rapport au premier moyen de couplage (4) ;
• **X** Introduire l'élément expansible (2) au sein du réservoir de stockage pour gaz sous pression pour véhicule (1) par l'au moins une ouverture (10) ;
• Connecter l'élément expansible (2) à une conduite (3) d'un liquide (6) ;
• Remplir l'élément expansible (2) de liquide (6) ;
• Exercer une pression, Pᵢₙₜ., sur l'ensemble des parois intérieures du réservoir de stockage pour gaz sous pression pour véhicule (1) au moyen de l'élément expansible (2) rempli de liquide (6) ;
• Mesurer une déformation possible du réservoir de stockage pour gaz sous pression pour véhicule (1) ;
• Vider le liquide (6) contenu dans l'élément expansible (2) ;
• Sortir l'élément expansible (2) du réservoir de stockage pour gaz sous pression pour véhicule (1) par l'au moins une ouverture (10).

2. Procédé de mesure de résistance mécanique d'un réservoir de stockage pour gaz sous pression pour véhicule (1) selon la revendication 1, tel que l'élément expansible (2) est une vessie (20).

3. Procédé de mesure de résistance mécanique d'un réservoir de stockage pour gaz sous pression pour véhicule (1) selon l'une quelconque des revendications précédentes, tel que le premier moyen d'étirage (5) est une conduite de remplissage (3) de l'élément expansible (2) par le liquide (6).

4. Procédé de mesure de résistance mécanique d'un réservoir de stockage pour gaz sous pression pour véhicule selon la revendication 3, tel que la conduite de remplissage (3) de l'élément expansible (2) par le liquide (6) à un diamètre extérieur inférieur au diamètre intérieur de l'au moins une ouverture (10).

5. Procédé de mesure de résistance mécanique d'un réservoir de stockage pour gaz sous pression pour véhicule (1) selon une quelconque des revendications précédentes, tel que le liquide (6) est sélectionné parmi le groupe de liquides consistant en de l'eau ou de solution à base d'eau, préférentiellement le liquide (6) est de l'eau de ville.

6. Procédé de mesure de résistance mécanique d'un réservoir de stockage pour gaz sous pression pour véhicule selon une quelconque des revendications précédentes, tel que l'élément expansible (2) est à base d'un matériau sélectionné parmi le groupe consistant en du caoutchouc Butadiène-Acrylonitrile (NBR), du Butadiène Acrylonitrile hydrogéné (HNBR), du nitrile carboxylé (XNBR), du caoutchouc Ethylène-Propylène-Diène (EPDM), du Silicone Polysiloxane-Vinyle-Méthyle (VMQ), du caoutchouc fluoré (FKM), du caoutchouc perfluoré (FFKM), du Chloroprène (CR), du polyacrylate (ACM), de l'Ethylène-acrylate (AEM) et du caoutchouc naturel.

7. Procédé de mesure de résistance mécanique d'un réservoir de stockage pour gaz sous pression pour véhicule selon une quelconque des revendications précédentes, tel qu'il comprend, avant l'étape consistant à remplir l'élément expansible (2) de liquide (6), une étape de pré-remplissage de l'élément expansible (2) de liquide (6).

8. Procédé de mesure de résistance mécanique d'un réservoir de stockage pour gaz sous pression pour véhicule selon une quelconque des revendications précédentes, tel qu'il comprend, avant l'étape consistant à remplir l'élément expansible (2) de liquide (6), une étape de gonflage de l'élément expansible (2).

9. Dispositif de mesure de résistance mécanique d'un réservoir de stockage pour gaz sous pression pour véhicule (1), ledit dispositif comprenant :
• un élément expansible (2) apte à être inséré au sein du réservoir de stockage pour gaz sous pression pour véhicule (1), ledit élément expansible (2) étant apte à contenir un liquide (6) une fois inséré au sein dudit réservoir (1) ;
• un premier moyen de couplage (4) apte à être assemblé à l'élément expansible (2) ;
• un premier moyen d'étirement (5) de l'élément expansible (2) apte à être connecté au premier moyen de couplage (4) et apte à étirer l'élément expansible (2) dans le sens de la longueur par au moins un mouvement en translation du premier moyen d'étirage (5) par rapport au premier moyen de couplage (4) ;
• une conduite (3) de liquide (6) apte à être connectée au premier moyen de couplage (4) ;
• des moyens d'évacuation du gaz contenu dans l'élément expansible (2) et/ou le réservoir (1).

10. Dispositif de mesure de résistance mécanique d'un réservoir de stockage pour gaz sous pression pour véhicule (1) selon la revendication 9, tel que l'élément expansible (2) est une vessie (20).

11. Dispositif de mesure de résistance mécanique d'un réservoir de stockage pour gaz sous pression pour véhicule (1) selon une quelconque des revendications 9 à 10, tel que le premier moyen d'étirement (5) est une tige.

12. Dispositif de mesure de résistance mécanique d'un réservoir de stockage pour gaz sous pression pour véhicule selon la revendication 11, tel que la tige est la conduite de liquide (3).

13. Dispositif de mesure de résistance mécanique d'un réservoir de stockage pour gaz sous pression pour véhicule selon une quelconque des revendications 9 à 12, tel qu'il comprend une pompe apte à évacuer le liquide (6) contenu dans l'élément expansible (2).

14. Dispositif de mesure de résistance mécanique d'un réservoir de stockage pour gaz sous pression pour véhicule selon une quelconque des revendications 9 à 13, tel que l'élément expansible (2) comprend une zone de réception du premier moyen de couplage (4).

## Patentansprüche

1. Verfahren zum Messen der mechanischen Festigkeit eines Speicherbehälters für Druckgas für Fahrzeuge (1), wobei das Verfahren wenigstens die folgenden Schritte umfasst:
• Bereitstellen eines Speicherbehälters für Druckgas für Fahrzeuge (1), der wenigstens eine Öffnung (10) umfasst;
• Zusammenfügen eines ersten Kopplungsmittels (4) mit einem dehnbaren Element (2);
• Strecken des dehnbaren Elements (2) in der Längenrichtung durch wenigstens eine Translationsbewegung eines ersten Streckmittels (5) relativ zu dem ersten Kopplungsmittel (4);
• Einführen des dehnbaren Elements (2) in den Speicherbehälter für Druckgas für Fahrzeuge (1) über die wenigstens eine Öffnung (10);
• Anschließen des dehnbaren Elements (2) an eine Rohrleitung (3) für eine Flüssigkeit (6);
• Befüllen des dehnbaren Elements (2) mit Flüssigkeit (6);
• Ausüben eines Drucks, Pᵢₙₜ., auf sämtliche Innenwände des Speicherbehälters für Druckgas für Fahrzeuge (1) mittels des mit Flüssigkeit (6) befüllten dehnbaren Elements (2);
• Messen einer möglichen Verformung des Speicherbehälters für Druckgas für Fahrzeuge (1);
• Ablassen der in dem dehnbaren Element (2) enthaltenen Flüssigkeit (6);
• Herausnehmen des dehnbaren Elements (2) aus dem Speicherbehälter für Druckgas für Fahrzeuge (1) über die wenigstens eine Öffnung (10).

2. Verfahren zum Messen der mechanischen Festigkeit eines Speicherbehälters für Druckgas für Fahrzeuge (1) nach Anspruch 1, wobei das dehnbare Element (2) eine Blase (20) ist.

3. Verfahren zum Messen der mechanischen Festigkeit eines Speicherbehälters für Druckgas für Fahrzeuge (1) nach einem der vorhergehenden Ansprüche, wobei das erste Streckmittel (5) eine Rohrleitung (3) zum Befüllen des dehnbaren Elements (2) mit der Flüssigkeit (6) ist.

4. Verfahren zum Messen der mechanischen Festigkeit eines Speicherbehälters für Druckgas für Fahrzeuge nach Anspruch 3, wobei die Rohrleitung (3) zum Befüllen des dehnbaren Elements (2) mit der Flüssigkeit (6) einen Außendurchmesser hat, der kleiner ist als der Innendurchmesser der wenigstens einen Öffnung (10).

5. Verfahren zum Messen der mechanischen Festigkeit eines Speicherbehälters für Druckgas für Fahrzeuge (1) nach einem der vorhergehenden Ansprüche, wobei die Flüssigkeit (6) ausgewählt ist aus der Groppe von Flüssigkeiten bestehend aus Wasser oder aus einer Lösung auf Wasserbasis, wobei die Flüssigkeit (6) bevorzugt Leitungswasser ist.

6. Verfahren zum Messen der mechanischen Festigkeit eines Speicherbehälters für Druckgas für Fahrzeuge nach einem der vorhergehenden Ansprüche, wobei das dehnbare Element (2) auf Basis eines Materials ist, das ausgewählt ist aus der Gruppe bestehend aus Acrylnitril-Butadien-Kautschuk (NBR), hydriertem Acrylnitril-Butadien-Kautschuk (HNBR), carboxyliertem Nitril-Kautschuk (XNBR), Ethylen-Propylen-Dien-Kautschuk (EPDM), Vinyl-Methyl-Polysiloxan-SilikonKautschuk (VMQ), Fluorkautschuk (FKM), Perfluorkautschuk (FFKM), Chloropren-Kautschuk (CR), Polyacrylat-Kautschuk (ACM), Ethylen-Acrylat-Kautschuk (AEM) und Naturkautschuk.

7. Verfahren zum Messen der mechanischen Festigkeit eines Speicherbehälters für Druckgas für Fahrzeuge nach einem der vorhergehenden Ansprüche, wobei es, vor dem Schritt des Befüllens des dehnbaren Elements (2) mit Flüssigkeit (6), einen Schritt des Vorbefüllens des dehnbaren Elements (2) mit Flüssigkeit (6) umfasst.

8. Verfahren zum Messen der mechanischen Festigkeit eines Speicherbehälters für Druckgas für Fahrzeuge nach einem der vorhergehenden Ansprüche, wobei es, vor dem Schritt des Befüllens des dehnbaren Elements (2) mit Flüssigkeit (6), einen Schritt des Aufblähens des dehnbaren Elements (2) umfasst.

9. Vorrichtung zum Messen der mechanischen Festigkeit eines Speicherbehälters für Druckgas für Fahrzeuge (1), wobei die Vorrichtung umfasst:
• ein dehnbares Element (2), das eingerichtet ist, um in den Speicherbehälter für Druckgas für Fahrzeuge (1) eingeführt zu werden, wobei das dehnbare Element (2) eingerichtet ist, um eine Flüssigkeit (6) zu enthalten, sobald es in den Behälter (1) eingebracht ist;
• ein erstes Kopplungsmittel (4), das eingerichtet ist, um mit dem dehnbaren Element (2) zusammengefügt zu werden;
• ein erstes Mittel (5) zum Strecken des dehnbaren Elements (2), das eingerichtet ist, um an das erste Kopplungsmittel (4) angeschlossen zu werden, und das eingerichtet ist, um das dehnbare Element (2) der in der Längenrichtung über wenigstens eine Translationsbewegung des ersten Streckmittels (5) relativ zu dem ersten Kopplungsmittel (4) zu strecken;
• eine Rohrleitung (3) für die Flüssigkeit (6), die eingerichtet ist, um an das erste Kopplungsmittel (4) angeschlossen zu werden;
• Mittel zum Ableiten des in dem dehnbaren Element (2) und/oder dem Behälter (1) enthaltenen Gases.

10. Vorrichtung zum Messen der mechanischen Festigkeit eines Speicherbehälters für Druckgas für Fahrzeuge (1) nach Anspruch 9, wobei das dehnbare Element (2) eine Blase (20) ist.

11. Vorrichtung zum Messen der mechanischen Festigkeit eines Speicherbehälters für Druckgas für Fahrzeuge (1) nach einem der Ansprüche 9 bis 10, wobei das erste Streckmittel (5) ein Stab ist.

12. Vorrichtung zum Messen der mechanischen Festigkeit eines Speicherbehälters für Druckgas für Fahrzeuge nach Anspruch 11, wobei der Stab die Rohrleitung (3) für Flüssigkeit ist.

13. Vorrichtung zum Messen der mechanischen Festigkeit eines Speicherbehälters für Druckgas für Fahrzeuge nach einem der Ansprüche 9 bis 12, wobei sie eine Pumpe umfasst, die eingerichtet ist, um die in dem dehnbaren Element (2) enthaltene Flüssigkeit (6) abzuleiten.

14. Vorrichtung zum Messen der mechanischen Festigkeit eines Speicherbehälters für Druckgas für Fahrzeuge nach einem der Ansprüche 9 bis 13, wobei das dehnbare Element (2) eine Zone zum Aufnehmen des ersten Kopplungsmittels (4) umfasst.

## Claims

1. A method for measuring mechanical strength of a pressurized gas storage tank for a vehicle (1), said method comprising at least the following steps:
• Providing a pressurized gas storage tank for a vehicle (1) having at least one opening (10);
• Assembling a first coupling means (4) to an expandable element (2);
• Stretching the expandable element (2) in the lengthwise direction by at least one translational movement of a first stretching means (5) with respect to the first coupling means (4);
• Introducing the expandable element (2) into the pressurized gas storage tank for a vehicle (1) via the at least one opening (10);
• Connecting the expandable element (2) to a pipe (3) for a liquid (6);
• Filling the expandable element (2) with liquid (6);
• Exerting a pressure, P_{int.}, on all the interior walls of the pressurized gas storage tank for a vehicle (1) by means of the expandable element (2) filled with liquid (6);
• Measuring a possible deformation of the pressurized gas storage tank for a vehicle (1);
• Emptying the liquid (6) contained in the expandable element (2);
• Removing the expandable element (2) from the pressurized gas storage tank for a vehicle (1) via the at least one opening (10).

2. The method for measuring mechanical strength of a pressurized gas storage tank for a vehicle (1) according to claim 1, wherein the expandable element (2) is a bladder (20).

3. The method for measuring mechanical strength of a pressurized gas storage tank for a vehicle (1) according to any one of the preceding claims, wherein the first stretching means (5) is a filling pipe (3) for filling the expandable element (2) with the liquid (6).

4. The method for measuring mechanical strength of a pressurized gas storage tank for a vehicle according to claim 3, wherein the filling pipe (3) for filling the expandable element (2) with the liquid (6) has an outside diameter smaller than the inside diameter of the at least one opening (10).

5. The method for measuring mechanical strength of a pressurized gas storage tank for a vehicle (1) according to any one of the preceding claims, wherein the liquid (6) is selected from the group of liquids consisting of water or water-based solution, preferentially the liquid (6) is mains water.

6. The method for measuring mechanical strength of a pressurized gas storage tank for a vehicle according to any one of the preceding claims, wherein the expandable element (2) is based on a material selected from the group consisting of acrylonitrile-butadiene rubber (NBR), hydrogenated acrylonitrile-butadiene rubber (HNBR), carboxylated nitrile (XNBR), ethylenepropylene-diene rubber (EPDM), vinyl-methyl polysiloxane silicone (VMQ), fluorinated rubber (FKM), perfluorinated rubber (FFKM), chloroprene (CR), polyacrylate (ACM), acrylate-ethylene (AEM) and natural rubber.

7. The method for measuring mechanical strength of a pressurized gas storage tank for a vehicle according to any one of the preceding claims, wherein it comprises, before the step consisting of filling the expandable element (2) with liquid (6), a step of pre-filling the expandable element (2) with liquid (6).

8. The method for measuring mechanical strength of a pressurized gas storage tank for a vehicle according to any one of the preceding claims, wherein it comprises, before the step consisting of filling the expandable element (2) with liquid (6), a step of inflating the expandable element (2).

9. A device for measuring mechanical strength of a pressurized gas storage tank for a vehicle (1), said device comprising:
• an expandable element (2) able to be inserted into the pressurized gas storage tank for a vehicle (1), said expandable element (2) being able to contain a liquid (6) once inserted into said tank (1);
• a first coupling means (4) able to be assembled with the expandable element (2);
• a first stretching means (5) of the expandable element (2) able to be connected to the first coupling means (4) and able to stretch the expandable element (2) in the lengthwise direction by at least one translational movement of the first stretching means (5) with respect to the first coupling means (4);
• a liquid (6) pipe (3) able to be connected to the first coupling means (4);
• means for discharging the gas contained in the expandable element (2) and/or the tank (1).

10. The device for measuring mechanical strength of a pressurized gas storage tank for a vehicle (1) according to claim 9, wherein the expandable element (2) is a bladder (20).

11. The device for measuring mechanical strength of a pressurized gas storage tank for a vehicle (1) according to any one of claims 9 to 10, wherein the first stretching means (5) is a rod.

12. The device for measuring mechanical strength of a pressurized gas storage tank for a vehicle according to claim 11, wherein the rod is the liquid pipe (3).

13. The device for measuring mechanical strength of a pressurized gas storage tank for a vehicle according to any one of claims 9 to 12, wherein it comprises a pump able to discharge the liquid (6) contained in the expandable element (2).

14. The device for measuring mechanical strength of a pressurized gas storage tank for a vehicle according to any one of claims 9 to 13, wherein the expandable element (2) comprises a zone for receiving the first coupling means (4).
